# EUROPEAN PATENT APPLICATION

(11) **EP 2 993 898 A1**
(43) Date of publication of application: **09.03.2016**
(21) Application number: 14791043.4
(22) Date of filing: 28.04.2014
(51) Int. Cl.: H04N 7/015

(54) **APPARATUS AND METHOD OF TRANSMITTING AND RECEIVING SIGNAL**

(30) Priority: 01.05.2013 US 201361818408 P
(71) Applicant: LG Electronics Inc., Yeongdeungpo-gu, Seoul 07336 (KR)
(72) Inventor: OH, Hyunmook, Seoul 137-893 (KR); SUH, Jongyeul, Seoul 137-893 (KR); HWANG, Soojin, Seoul 137-893 (KR)
(74) Representative: Cabinet Plasseraud
(86) International application number: PCT/KR2014/003725
(87) International publication number: WO 2014/178587

(57) **Abstract**

The present invention relates to an apparatus and a method of transmitting and receiving a signal. According to an embodiment of the present invention, provided is a method of transmitting a signal comprising the steps of: encoding ultra high definition (UHD) video data; encoding signaling information containing identification information of UHD service on the basis of the encoded UHD video data; and transmitting the encoded UHD video data in-band (IB) and transmitting the encoded signaling information containing identification information of UHD service out-of-band (OOB).

## Description

### Field of the Invention

The present invention relates to an apparatus and a method of transmitting and receiving a signal.

### Background Art

As the video signal processing speed has become faster, a solution for encoding/decoding ultra high definition (UHD) video is being developed. UHD definition is defined as a high definition video image having a definition that is 4 times or 16 times higher than the HD (high definition) resolution. The development of a high-efficiency codec technology for transmitting a UHD video television signal by using a single codec carried out by several standard organizations. However, since a method that can transmit UHD video is not yet defined in the current broadcasting system, even if a method for encoding/decoding ultra high definition (UHD) video is proposed, there were no methods for transmitting/receiving UHD video in the current broadcasting system.

For example, a cable broadcast transmitting method cannot transmit UHD video within the conventional (or legacy) system, and, similarly, even if a cable broadcast receiving device (or apparatus) receives a UHD video stream, there is no method that can verify and output the UHD video stream. Even if a broadcasting system is capable of providing a UHD service, in case the UHD service is provided separately from the conventional broadcasting system, there are problems in aspects of backward compatibility with HD broadcasting and cost. Accordingly, a technology that can provide UHD service on the basis of the conventional (or legacy) transmitting and receiving system is being required.

### Detailed Description of the Invention

### Technical Objects

An object of the present invention is to provide a method of transmitting and receiving a signal and an apparatus of transmitting and receiving a signal that can provide high quality UHD content service on the basis of a conventional digital cable broadcasting system.

### Technical Solutions

An exemplary embodiment of the present invention provides a method of transmitting a signal including the steps of encoding ultra high definition (UHD) video data; encoding signaling information containing identification information of UHD service on the basis of the encoded UHD video data; and transmitting the encoded UHD video data in-band (IB) and transmitting the encoded signaling information containing identification information of UHD service out-of-band (OOB).

Another exemplary embodiment of the present invention provides an apparatus of receiving a broadcast signal including a communication unit receiving encoded UHD video data in-band (IB) and receiving encoded signaling information containing identification information of UHD service out-of-band (OOB); an OOB processor decoding signaling information containing identification information of the received UHD service; and an IB processor decoding the received UHD video data on the basis of the identification information of the decoded signaling information.

### Effects of the Invention

According to an exemplary embodiment of the present invention, UHD Service may be provided based upon a conventional digital cable broadcasting system.

### Brief Description of the Drawings

Fig. 1 illustrates a method of transmitting a signal according to an exemplary embodiment of the present invention.
Fig. 2 illustrates an exemplary method of providing a service through a digital cable broadcasting system of the present invention.
Fig. 3 illustrates a LVCT (Longform Virtual Channel Table) according to an exemplary embodiment of the present invention.
Fig. 4 illustrates a SVCT (Shortform Virtual Channel Table) according to an exemplary embodiment of the present invention.
Fig. 5 illustrates an exemplary descriptor for signaling UHD service information that may be included in a table shown in Fig. 4.
Fig. 6 illustrates an exemplary descriptor that may be included in a descriptor shown in Fig. 5.
Fig. 7 illustrates an exemplary descriptor that may be included in a descriptor shown in Fig. 6.
Fig. 8 illustrates a SVCT (Shortform Virtual Channel Table) according to another exemplary embodiment of the present invention.
Fig. 9 illustrates a field that may be included in a VCM descriptor shown in Fig. 8.
Fig. 10 illustrates exemplary signaling information indicating a UHD service that may be included in a virtual channel descriptor shown in Fig. 9.
Fig. 11 illustrates an exemplary descriptor for a UHD service that may be included in a VCT according to an exemplary embodiment of the present invention.
Fig. 12 illustrates a service location descriptor according to an exemplary embodiment of the present invention.
Fig. 13 illustrates a component list descriptor according to an exemplary embodiment of the present invention.
Fig. 14 illustrates a parameterized service descriptor according to an exemplary embodiment of the present invention.
Fig. 15 illustrates a method of signaling information for a UHD service according to an exemplary embodiment of the present invention.
Fig. 16 illustrates an exemplary AEIT (Aggregate Event Information Table) according to an exemplary embodiment of the present invention.
Fig. 17 illustrates a method of receiving a signal according to an exemplary embodiment of the present invention.
Fig. 18 illustrates a method of transmitting a signal according to an exemplary embodiment of the present invention.
Fig. 19 illustrates an apparatus of receiving a signal according to an exemplary embodiment of the present invention.

### Best Mode for Carrying Out the Present Invention

Hereinafter, in order to easily describe the exemplary embodiment of the present invention, description will be provided with reference to the accompanying drawings.

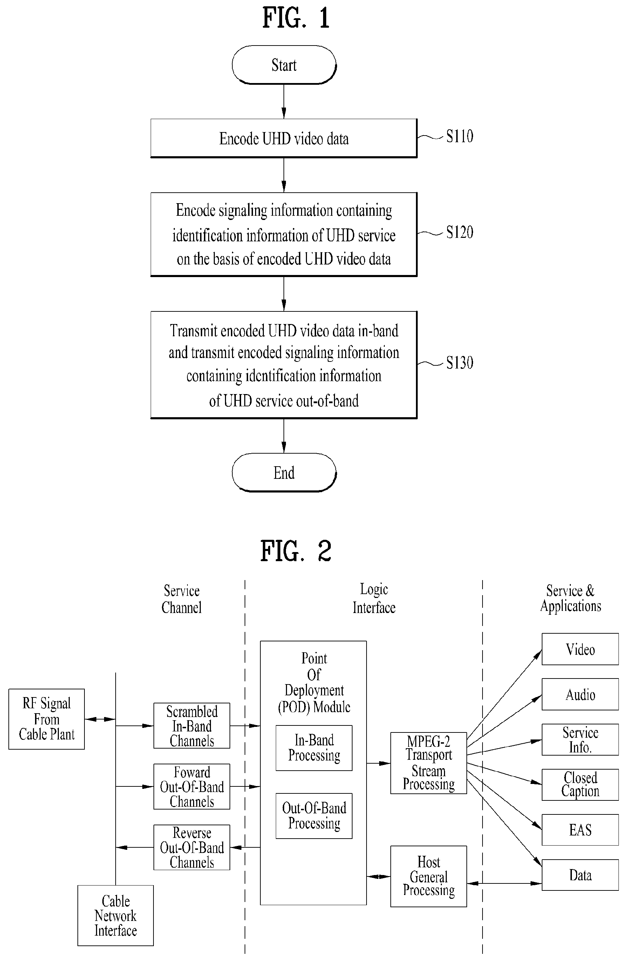

Fig. 1 illustrates a method of transmitting a signal according to an exemplary embodiment of the present invention. The method of transmitting a signal according to an exemplary embodiment of the present invention will hereinafter be described in detail with reference to Fig. 1.

An apparatus of transmitting a signal encodes ultra high definition (UHD) video data (S110).

The apparatus of transmitting a signal encodes signaling information containing identification information of UHD service on the basis of the encoded UHD video data (S120).

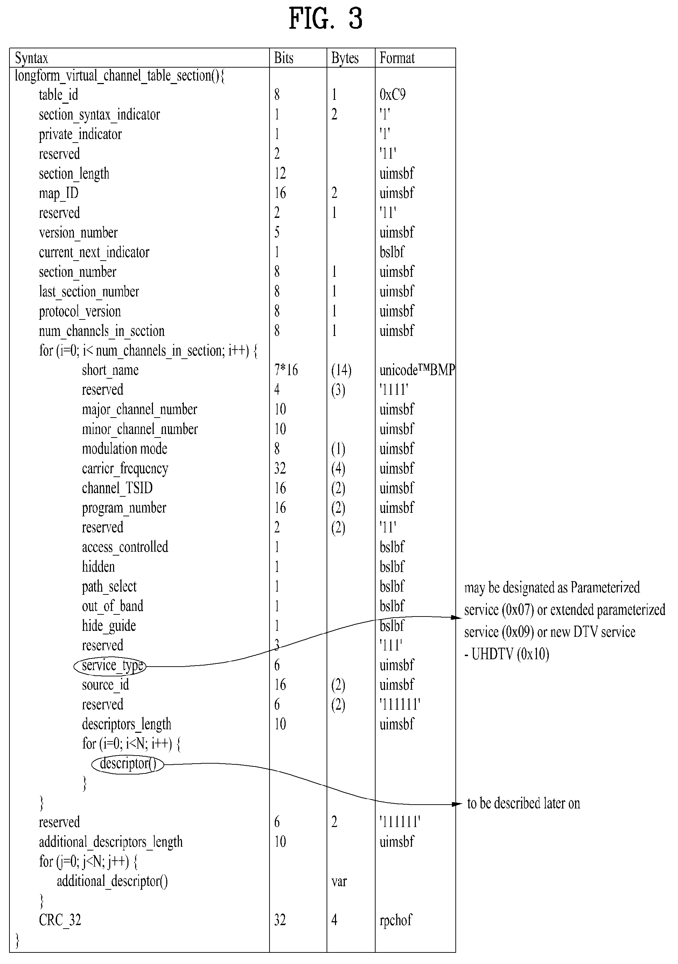

For example, the signaling information may correspond to information that may determine whether or not UHD broadcasting is performed in an OOB (Out-Of-Band)-SI based UHD receiver, which is used in cable broadcasting, and information related to video associated service details. More specifically, the signaling information may include information indicating that the service corresponds to a UHD service, resolution, frame rate, bit-depth of the video, information on a usage of parallel processing, and so on. Examples of the signaling information will be described later on with reference to Fig. 3 to Fig. 16.

The apparatus of transmitting a signal transmits the encoded UHD video data in-band (IB) and transmits the encoded signaling information containing identification information of UHD service out-of-band (OOB) (S130).

Fig. 2 illustrates an exemplary method of providing a service through a digital cable broadcasting system of the present invention.

The transmitting apparatus transmits a RF signal including digital cable broadcast data to a receiving apparatus. The digital cable broadcast data may include general broadcast information and supplemental service information. The transmitting apparatus may transmit general broadcast information through an In-band channel (IB channel), and the transmitting apparatus may transmit supplemental service information through an Out-of-band channel (OOB channel).

A receiving apparatus including a POD may be connected to an external network. For example, in case of using a MoCA (Multimedia Over Coax Alliance), an IP-based network may be established within a coaxial cable network and may then be connected. Alternatively, the receiving apparatus may be connected to an external network by using a DOCSIS modem, or the receiving apparatus may be connected to an external network by using a wireless relay establishing connection to a wireless internet network or by using a wired relay establishing connection to a wired internet network, such as a wired ADSL relay. The exemplary connection to the external network is merely exemplary, and which relay is to be used may vary depending upon the method according to which connection to the external network is being established.

Each set of information may be processed by a POD (Point Of Deployment), and the POD may verify whether or not a subscription is made for the signaled broadcast service and may then provide a final service. The POD may include a Conditional Access (CA) system, and the POD may be separated from the receiving apparatus main body.

The transmitting apparatus may perform encoding on UHD video data and signaling information, which included UHD service identification information that is based on the UHD video data. The transmitting apparatus transmits the encoded UHD video data through the IB channel and transmits the encoded signaling information through the OOB channel.

The POD may verify its authority on the UHD broadcast service and may then provide the UHD broadcast service to the user. When the authority is verified, the receiving apparatus may receive the encoded UHD video data through the IB channel and may receive the signaling information including the encoded UHD identification information through the OOB channel. The receiving apparatus may decode signaling information including the received UHD identification information. Thereafter, based upon the decoded UHD identification information, the receiving apparatus may decode the received UHD video data so as to provide the UHD service.

In addition to the UHD video data, the UHD broadcast data may also include information, such as audio data, UHD service information, caption information, Emergency Alarm Service (EAS), and so on. Each set of information or data may be decoded through a transport stream processing procedure, so as to be provided to the user.

Thereafter, the OOB processing procedure of the POD may perform a two-way communication and may transmit the data to an external device through the network. More specifically, the POD may transmit data respective to two-way communication (e.g., viewing of UHD pay-per-view program, status information of the receiver, user input, and so on) to an external device through the network.

UHD service identification information is required in order to provide the UHD broadcast service. Hereinafter, an example of signaling the UHD identification information will be described in detail.

Fig. 3 illustrates a LVCT (Longform Virtual Channel Table) according to an exemplary embodiment of the present invention.

Information on the UHD service may be transmitted through the OOB channel. The transmitting apparatus may transmit information indicating that the data being transmitted through a definition on the service type correspond to data associated with the UHD service. By verifying the service type information, the receiving apparatus may verify that the data correspond to data associated with the UHD service, and, then, by receiving UHD data from the transmitting apparatus, the receiving apparatus may provide the UHD service to the user. As described above, the service type may be transmitted through a LVCT (Longform Virtual Channel Table), a SVCT (Shortform Virtual Channel Table). The LVCT may include detailed information (e.g., a stream being connected to the service, channel tuning information, detailed information on the service, and so on) on each channel. For example, the detailed information on the UHD service may include not only resolution, frame rate, and bit depth, but may also include information on whether or not parallel processing is used. The information included in the LVCT will be described as follows.

A table_id field identifies a table. For example, a table_id field value indicating a LVCT may be equal to 0xC9. (An 8-bit unsigned integer number that indicates the type of table section being defined herein. For the longform_virtual_channel_table _section, the table_id shall be 0xC9.)

A section_syntax_indicator field corresponds to a 1-bit field being set to 1 for the LVCT. (The section_syntax _indicator is a one-bit field which shall be set to '1' for the longform_virtual_channel_table_section().)

A private_indicator field corresponds to a 1-bit field being set to 1. (This 1-bit field shall be set to '1'.)

A section_length field indicates in number of bytes a length of a table section that follows this field. (This is a twelve bit field that specifies the number of bytes of the section, starting immediately following the section_length field, and including the CRC. The value in this field shall not exceed 4093.)

A map_ID field corresponds to a 16-bit field, which identifies a plurality of LVCTs. (A 16-bit identifier for this Long-form Virtual Channel Table. In some applications, the POD module may receive Long-form Virtual Channel Table sections corresponding to distinct channel maps. In this case, the POD may use the map_ID to distinguish them, using information provided outside the scope of this standard. In every case, the Host will receive just on L-VCT across the POD to Host interface, and the map_ID parameter may be ignored.)

A version_number field corresponds to a 5-bit field indicating a version number of the table. (This 5 bit field is the version number of the Long-form Virtual Channel Table. For the current L-VCT (current_next_indicator=1), the version number shall be incremented by 1 whenever the value of the current L-VCT changes. Upon reaching the value 31, it wraps around to 0. For the next L-VCT (current_next_indicator=0), the version number shall be one unit more than that of the current L-VCT (also in modulo 32 arithmetic). In any case, the value of the version_number shall be identical to that of the corresponding entries in the MGT.)

A current_next_indicator field corresponds to a 1-bit field, which indicates whether this table is currently applicable or applicable to a next table. (A one-bit indicator, which when set to '1' indicates that the Long-form Virtual Channel Table sent is currently applicable. When the bit is set to '0', it indicates that the table sent is not yet applicable and shall be the next table to become valid.)

A section_number field indicates a number of a section. (This 8 bit field gives the number of this section. The section_number of the first section in the Long-form Virtual Channel Table shall be 0x00. It shall be incremented by one with each additional section in the Long-form Virtual Channel Table.)

A last_section_number field identifies a number of a last section. (This 8 bit field specifies the number of the last section (that is, the section with the highest section_number) of the complete Long-form Virtual Channel Table.)

A protocop_version field corresponds to a field having a function for allowing, in a later process, a current table type transmitting a parameter that is different from a parameter defined in the current protocol. (An 8-bit unsigned integer field whose function is to allow, in the future, this table type to carry parameters that may be structured differently than those defined in the current protocol. At present, the only valid value for protocol_version is zero. Non-zero values of protocol_version may only be processed by Hosts designed to accommodate the later versions as they become standardized.)

A num_channels_in_section field indicates a number of virtual channels. (This 8 bit field specifies the number of virtual channels in the L-VCT section. The number is limited by the section length.)

A short_name field corresponds to a 14-byte field indicating a short name for a virtual channel. (The name of the virtual channel, represented as a sequence of one to seven 16-bit character codes coded in accordance with the Basic Multilingual Plane (BMP) of Unicode^{™} characters, as specified in ISO 10646-1. If the name of the virtual channel is shorter than seven Unicode^{™} characters, one or more instances of the null character value 0x0000 shall be used to pad the string to its fixed 14-byte length.)

A major_channel_number field indicates a number of major channels associated with the virtual channel, and a minor_channel_number field indicates a number of minor channels associated with the virtual channel. (These two 10-bit fields represent either a two-part or a one-part virtual channel number associated with the virtual channel being defined in this iteration of the "for" loop. One-part numbers range from 0 to 16,383. Two-part numbers consist of a major and a minor number part; the range of each is 0 to 999. The one- or two-part number acts as the user's reference number for the virtual channel. Some channels may be represented with a one-part number while others in the VCT are represented with two-part numbers.)

A modulation mode field indicates a modulation mode respective to a transmitted carrier of the virtual channel. (An 8-bit unsigned integer number that indicates the modulation mode for the transmitted carrier associated with this virtual channel. For digital signals, the standard values for modulation mode (values below 0x80) indicate transport framing structure, channel coding, interleaving, channel modulation, forward error correction, symbol rate, and other transmission-related parameters, by means of a reference to an appropriate standard. Values of modulation_mode 0x80 and above are outside the scope of SCTE. These may be used to specify non-standard modulation modes in private systems. A value of 0x80 for modulation_mode indicates that modulation parameters are specified in a private descriptor. The modulation_mode field shall be disregarded for inactive channels.)

A carrier_frequency field transmits carrier frequency information that is used by a transmission virtual channel. (A 32-bit unsigned integer that represents the carrier frequency associated with the analog or digital transmission associated with this virtual channel, in Hz. For QAMmodulated signals, the given carrier_frequency represents the location of the digitally modulated carrier; for VSB-modulated signals, the given carrier_frequency represents the location of the pilot tone; for analog signals, it represents the frequency of the picture carrier. The carrier_frequency field shall be disregarded for inactive channels.)

A channel_TSID field indicates a MPEG-2 Transport Stream ID respective to a Transport Stream (TS) transmitting a MPEG-2 program associated with the virtual channel. (A 16-bit unsigned integer field, in the range 0x0000 to 0xFFFF, that represents the MPEG-2 Transport Stream ID associated with the Transport Stream carrying the MPEG-2 program reference by this virtual channel. For inactive channels, channel_TSID represents the ID of the Transport Stream that will carry the service when it becomes active. The Host may use the channel_TSID to verify that a TS acquired at the referenced carrier frequency is actually the desired multiplex. Analog signals may have a TSID provided that it is different from any DTV Transport Stream identifier; that is, it shall be truly unique if present. A value of 0xFFFF for channel_TSID shall be specified for analog channels that do not have a valid TSID.)

A program_number field identifies a TS within each program service or virtual channel. (A 16-bit unsigned integer number that associates the virtual channel being defined here with the MPEG-2 Program Association and TS Program Map tables. For virtual channels representing analog services, a value of 0xFFFF shall be specified for program_number. For inactive channels (those not currently present in the Transport Stream), program_number shall be set to zero. This number shall not be interpreted as pointing to a Program Map Table entry.)

An access_controlled field indicates whether or not an event associated with the corresponding virtual channel may be controlled. (A 1-bit Boolean flag, when set, indicates that events associated with the virtual channel may be access controlled. When the flag is set to 0, event access is not restricted.)

A hidden field signifies whether or not the corresponding channel may be accessed by a direct entry (or field, attribute, entity) of a virtual channel number. (A 1-bit Boolean flag that indicates, when set, that the virtual channel is not accessed by the user by direct entry of the virtual channel number. Hidden virtual channels are skipped when the user is channel surfing, and appear as if undefined, if accessed by direct channel entry. Typical applications for hidden channels are test signals and NVOD services. Whether a hidden channel and its event may appear in EPG displays depends on the state of the hide_guide bit.)

A path_select field corresponds to a 1-bit field associating the virtual channel with a transmission path of an active channel. (A 1-bit field that associates the virtual channel with a transmission path. Two paths are available. For the cable transmission medium, path_select identifies which of two physical input cables carries the Transport Stream associated with this virtual channel.)

An out_of_band field indicates whether or not the virtual channel is being transmitted to an OOB (Out-Of-Band) physical transmission channel. (A Boolean flag that indicates, when set, that the virtual channel defined in this iteration of the "for" loop is carried on the cable on the Extended Channel interface carrying the tables defined in this protocol. When clear, the virtual channel is carries within a standard tuned multiplex at that frequency.)

A hide_guide field indicates whether or not the virtual channel and events of the virtual channel are to be displayed on an EPG display. (A Boolean flag that indicates, when set to 0 for a hidden channel, that the virtual channel and its events may appear in EPG displays. This bit shall be ignored for channels which do not have the hidden bit set, so that non-hidden channels and their events may always be included in EPG displays regardless of the state of the hide_guide bit. Typical applications for hidden channels with the hide_guide bit set to 1 are test signals and services accessible through application-level pointers.)

A service_type field identifies a service type being transmitted to the virtual channel. (A 6-bit enumerated type field that identifies the type of service carried in this virtual channel.)

As an exemplary embodiment for the UHD service, the service type may be designated as a parameterized service (0x07), an extended parameterized service (0x09), or a new DTV service (0x10). The above-described service names and values are merely exemplary, and, therefore, other names and values may be configured (or set) herein.

A source_id field corresponds to a 16-bit unsigned integer which indicates a programming source that is associated with the virtual channel. (A 16-bit unsigned integer number that identifies the programming source associated with the virtual channel. In this context, a source is one specific source of video, text, data, or audio programming. Source ID value zero is reserved to indicate that the programming source is not identified. Source ID values in the range 0x0001 to 0x0FFF shall be unique within the Transport Stream that carries the VCT, while values 0x1000 to 0xFFFF shall be unique at the regional level. Values for source_Ids 0x1000 and above shall be issued and administered by a Registration Authority designed by the ATSC.)

A descriptors_length transmits a byte-length of the next descriptor field. (Total length (in bytes) of the descriptors for this virtual channel that follows.)

A descriptor may include information required for a UHD service that is located within the table. A detailed example of the descriptor for the UHD service will be described later on.

An additional_descriptors_length field indicates a total length of the following VCT descriptors. (Total length (in bytes) of the VCT descriptor list that follows.)

An additional_descriptors may include additional descriptors.

CRC_32 corresponds to a 32-bit field including a CRC values. (This is a 32-bit field that contains the CRC values that ensures a zero output from the registers in the decoder defined in an Annex A of ISO/IEC 13818-1 "MEPG-2 Systems" after processing the entire Long-form Virtual Channel Table section.)

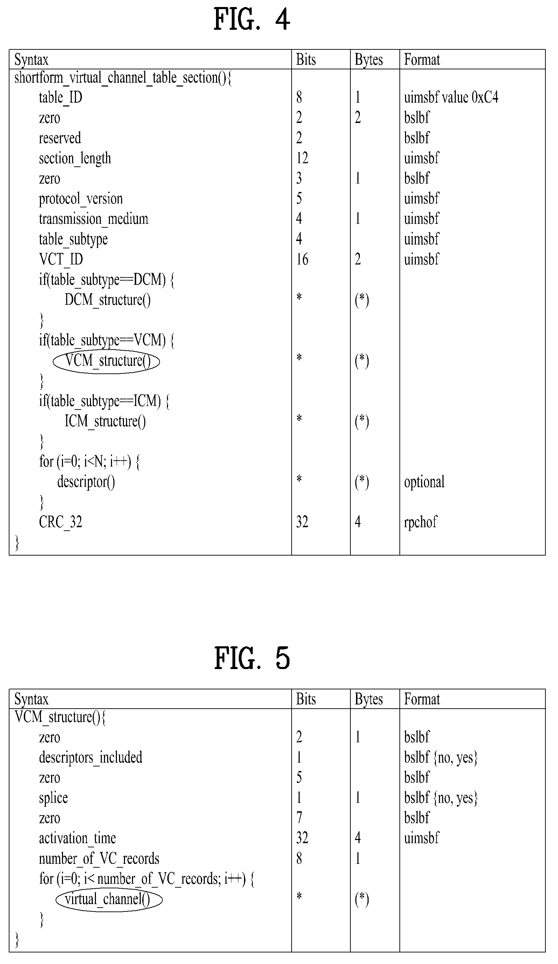

Fig. 4 illustrates a SVCT (Shortform Virtual Channel Table) according to an exemplary embodiment of the present invention. As described above, the service type may be transmitted through a LVCT (Longform Virtual Channel Table), a SVCT (Shortform Virtual Channel Table). The SVCT may include overall information (e.g., frequency, service type, and so on, of a channel through which data are being transmitted) on each channel. According to an exemplary embodiment, signaling of the information respective to the UHD service may use the service type field of a descriptor included in a virtual channel record of the SVCT. Information included in the SVCT will be described as follows.

A table_id field identifies a table. For example, a table_id field value indicating a SVCT may be equal to 0xC4. (The table_ID of the Short-form Virtual Channel Table shall be 0xC4.)

A section_length field indicates in number of bytes a length of a table section that follows this field. (This is a twelve bit field that specifies the number of bytes of the section, starting immediately following the section_length field, and including the CRC. The value in this field shall not exceed 4093.)

A protocop_version field corresponds to a field having a function for allowing, in a later process, a current table type transmitting a parameter that is different from a parameter defined in the current protocol. (An 8-bit unsigned integer field whose function is to allow, in the future, this table type to carry parameters that may be structured differently than those defined in the current protocol. At present, the only valid value for protocol_version is zero. Non-zero values of protocol_version may only be processed by Hosts designed to accommodate the later versions as they become standardized.)

A transmission_medium field is set to 0. (This 4-bit field shall be set to zero (0x0).)

A table_subtype field indicates a map type being transmitted from the SVCT. For example, the map type may correspond to one of a Defined Channel Map (DCM), a Virtual Channel Map (VCM), and an Inversed Channel Map (ICM). (A 4-bit field that indicates the map type being delivered in this S-VCT section. Three map types are currently defined, the Virtual Channel Map (VCM), the Defined Channel Map (DCM), and the Inversed Channel Map (ICM). An S-VCT section received with table_subtype indicating an unknown or unsupported map type shall be discarded.)

A VCT_ID field indicates a VCT to which the definition of a channel within the corresponding table is being applied. (A 16-bit unsigned integer value, in the range 0x0000 to 0xFFFF, indicating the VCT to which the channel definitions in this table section apply. This 16-bit field may be used by the POD module for filtering purposes. Only one version of the S-VCT, corresponding to one value of VCT_ID, shall be delivered to the Host across the Extended Channel interface at a given time.)

A descriptor may include additional descriptors.

CRC_32 corresponds to a 32-bit field including a CRC values. (This is a 32-bit field that contains the CRC values that ensures a zero output from the registers in the decoder defined in an Annex A of ISO/IEC 13818-1 "MEPG-2 Systems" after processing the entire Long-form Virtual Channel Table section.)

If the table subtype corresponds to the DCM, information included in a DCM_structure descriptor is identified, and, if the table subtype corresponds to the ICM, information included in an ICM_structure descriptor is identified. If the table subtype corresponds to the VCM, information included in a VCM_structure descriptor is identified. According to an exemplary embodiment, the identification information respective to UHD may be included in the VCM_structure descriptor.

Fig. 5 illustrates an exemplary descriptor for signaling UHD service information according to the exemplary embodiment of the present invention. Referring to Fig. 5, according to the exemplary embodiment, the VCM_structure descriptor is shown. Information included in the VCM_structure descriptor will hereinafter be described as follows.

A descriptors_included field indicates whether or not a record level descriptor exists in the table. (A Boolean flag that indicates, when set, that one or more record-level descriptors are present in the table section. When the flag is clear, the record-level descriptor block is absent. The activation time indicates the time at which the data delivered in the table section will be valid.)

A splice field indicates whether or not to perform splicing at a predetermined time after undergoing a preparation process associated with a virtual channel change. (A Boolean flag that indicates, when set, that the Host should arm video processing hardware to execute the application of the data delivered in the VCM_structure() at the next MPEG-2 video splice point if the virtual channel changes described in the table section apply to a currently acquired channel, and the activation_time is reached. If the activation is immediate or specified as a time that has since passed, the data should be applied immediately. When the splice flag is clear, the virtual channel change is made directly, without arming video hardware for a splice.)

An activation_time field provides an absolute time. (A 32-bit unsigned integer field providing the absolute second the virtual channel data carried in the table section will be valid, defined as the number of seconds since 0000 Hours UTC, January 6th, 1980. If the GPS_UTC_offset delivered in the System Time Table is zero, activation_time includes the correction for leap seconds. Otherwise, activation_time can be converted to UTC by subtracting the GPS_UTC_offset. If the activation_time is in the past, the data in the table section shall be considered valid immediately. An activation_time value of zero shall be used to indicate immediate activation.)

A number_of_VC_records field identifies a number of virtual_channel records that are located next within the table. A record is similar to a field. (An 8-bit unsigned integer number, in the range 1 to 255, that identifies the number of virtual_channels() records to follow in the table section. The number of records included is further limited by the allowed maximum table section length.)

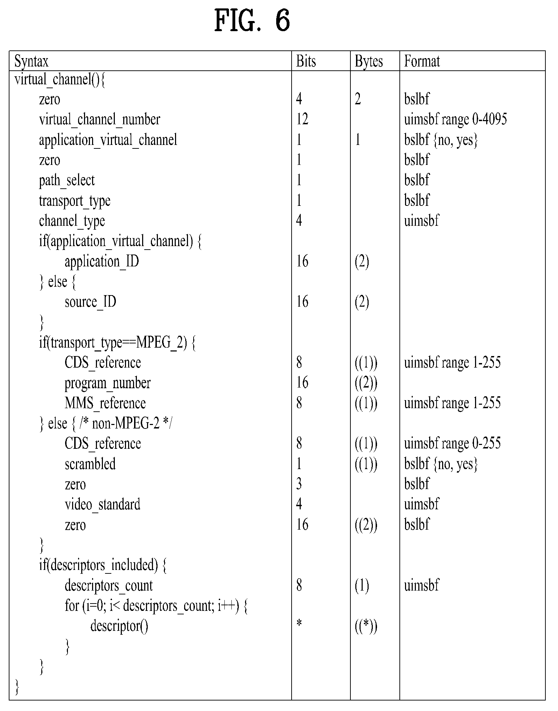

A virtual_channel descriptor will be described in detail in Fig. 6.

Fig. 6 illustrates an exemplary descriptor that may be included in a descriptor shown in Fig. 5. A virtual_channel descriptor is shown in Fig. 6. Information included in the virtual_channel descriptor will hereinafter be described as follows.

A virtual_channel_number field reflects a virtual channel that is provided and defined by the corresponding virtual channel record. (An unsigned 12-bit integer, in the range zero to 4095, reflecting the virtual channel whose definition is being provided by this virtual channel record, for the map identified by the VCT_ID field.)

An application_virtual_channel field indicates whether or not an access point is defined. (A binary flag that, when set, indicates this virtual channel defines an access point represented by the application_ID. When the flag is clear, the channel is not an application access point, and this virtual channel defines an access point represented by the source_ID. Support for application-type virtual channels is optional. Hosts not supporting application-type virtual channels may disregard all data associated with them. Support for application-type virtual channels is beyond the scope of this standard.)

A path_select field associates the virtual channel with a transmission path. (A 1-bit field that associates the virtual channel with a transmission path. For the cable transmission medium, path_select identifies which physical cable carries the Transport Stream associated with this virtual channel.)

A transport_type field identifies a transmission type (or transport type). (A 1-bit field identifying the type of transport carried on this carrier as either being an MPEG-2 transport (value zero), or not (value one).)

A channel_type field indicates the transmission type. (A 4-bit field defining the channel type.)

An application_ID field identifies an application associated with the virtual channel. (A 16-bit unsigned integer number, in the range 0x0001 to 0xFFFF, that identifies the application associated with the virtual channel, on a system-wide basis. One particular program guide application, for example, may look for a program carrying data in its native transmission format by searching through the Short-form Virtual Channel Table for a match on its assigned application_ID. In some cases, one application may be able to process streams associated with more than one application ID. The application ID may be used to distinguish content as well as format, for the benefit of processing within the application. The value zero for application_ID shall not be assigned; if specified in a Virtual Channel record, the value zero indicates "unknown" or "inapplicable" for the application_ID/source_ID field.)

A source_ID field identifies a program source associated with the virtual channel. (A 16-bit unsigned integer number, in the range 0x0000 to 0xFFFF, that identifies the programming source associated with the virtual channel, on a system-wide basis. In this context, a source is one specific source of video, text, data, or audio programming. For the purpose of referencing virtual channels to the program guide database, each such program source is associated with a unique value of source_ID. The source_ID itself may appear in an EPG database, where it tags entries to specific services. The value zero for source_ID, if used, shall indicate the channel is not associated with a source ID.)

A CDS_reference field identifies a frequency associated with the virtual channel. (An unsigned 8-bit integer number, in the range 0 to 255, that identifies the frequency associated with this virtual channel. Values 1 to 255 of CDS_reference are used as indices into the Carrier Definition Subtable to find a frequency to tune to acquire the virtual channel. The value zero is reserved to indicate that the referenced service is carried on all digital multiplexes in this VCM. The CDS_reference field shall be disregarded for inactive channels.)

A program_number field associates the vitrual channel number that is defined with a service that is defined in a Program Association and TS Program Map Table. (A 16-bit unsigned integer number that associates the virtual channel number being defined with services defined in the Program Association and TS Program Map Table sections. Access to elementary streams defined in each virtual channel record involves first acquiring the Transport Stream on the carrier associated with the virtual channel, then referencing the Program Association section in PID 0 to find the PID associated with the TS Program Map Table section for this program_number. PIDs for each elementary stream are then found by acquisition of the TS Program Map Table section.)

A MMS_reference field indicates an entry within a MMS. (An 8-bit unsigned integer value, in the range 0 to 255, that references an entry in the Modulation Mode Subtable (MMS). The value zero is illegal and shall not be specified. For digital waveforms, the MMS_reference associates the carrier with a digital modulation mode. For Host implementations that support only one set of modulation parameters, in systems in which one modulation method is used for all carriers, storage and processing of the MMS_reference is unnecessary. The MMS_reference field shall be disregarded for inactive channels.)

A scrambled field indicates whether or not an associated non-standard signal has been encoded. (A 1-bit Boolean flag that indicates, when set, that the associated non-Standard waveform is scrambled. When the flag is clear, the non-standard waveform is in the clear.)

A video_standard field indicates a video standard that is associated with a non-standard virtual channel. (A 4-bit field that indicates the video standard associated with this non-Standard virtual channel.) For example, the video_standard field may be set to one of many values signifying a standard, such as NTSC, PAL 625, PAL 525, SECAM, MAC, and so on.

A descriptors_count field indicates a total length of descriptors that follow.

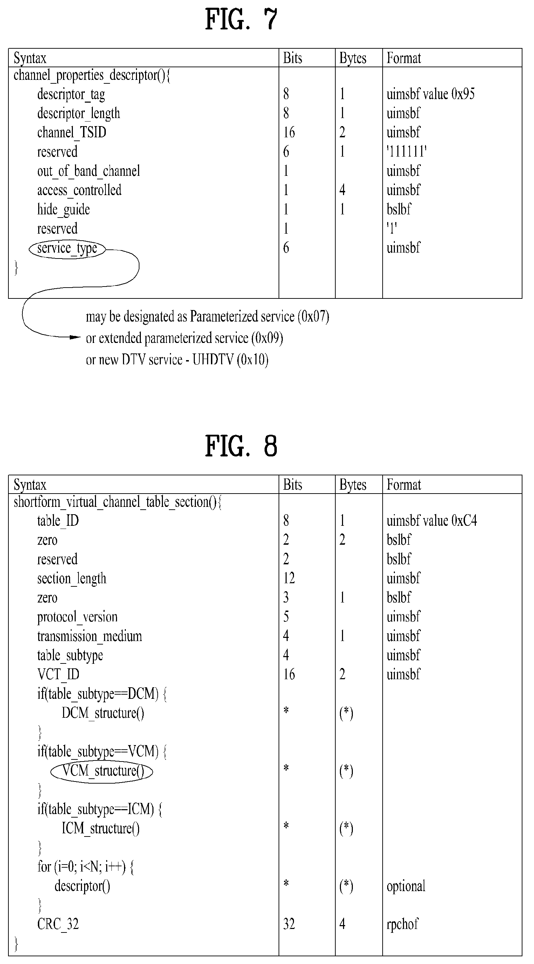

A descriptor may include information on the UHD service. Detailed information being included in the descriptor will be described in more detail in Fig. 7.

Fig. 7 illustrates an exemplary descriptor that may be included in a descriptor shown in Fig. 6. A descriptor including identification information of a UHD service may be entitled by using diverse names. For example, the descriptor may be referred to as a channel properties descriptor. Alternatively, the descriptor may also be referred to a UHD Service info descriptor. Information being included in the descriptor will be described as follows.

A descriptor_tag field may include an identifier identifying this descriptor, and a descriptor_length field may include a length of the descriptor.

A channel_TSID field indicates a MPEG-2 Transport Stream ID respective to a Transport Stream (TS) transmitting a MPEG-2 program associated with the virtual channel. (A 16-bit unsigned integer field, in the range 0x0000 to 0xFFFF, that represents the MPEG-2 Transport Stream ID associated with the Transport Stream carrying the MPEG-2 program reference by this virtual channel. For inactive channels, channel_TSID represents the ID of the Transport Stream that will carry the service when it becomes active. The Host may use the channel_TSID to verify that a TS acquired at the referenced carrier frequency is actually the desired multiplex. Analog signals may have a TSID provided that it is different from any DTV Transport Stream identifier; that is, it shall be truly unique if present. A value of 0xFFFF for channel_TSID shall be specified for analog channels that do not have a valid TSID.)

An out_of_band field indicates whether or not the virtual channel is being transmitted to an OOB (Out-Of-Band) physical transmission channel. (A Boolean flag that indicates, when set, that the virtual channel defined in this iteration of the "for" loop is carried on the cable on the Extended Channel interface carrying the tables defined in this protocol. When clear, the virtual channel is carries within a standard tuned multiplex at that frequency.)

An access_controlled field indicates whether or not an event associated with the corresponding virtual channel may be controlled. (A 1-bit Boolean flag, when set, indicates that events associated with the virtual channel may be access controlled. When the flag is set to 0, event access is not restricted.)

A hide_guide field indicates whether or not the virtual channel and events of the virtual channel are to be displayed on an EPG display. (A Boolean flag that indicates, when set to 0 for a hidden channel, that the virtual channel and its events may appear in EPG displays. This bit shall be ignored for channels which do not have the hidden bit set, so that non-hidden channels and their events may always be included in EPG displays regardless of the state of the hide_guide bit. Typical applications for hidden channels with the hide_guide bit set to 1 are test signals and services accessible through application-level pointers.)

A service_type field identifies a service type being transmitted to the virtual channel. (A 6-bit enumerated type field that identifies the type of service carried in this virtual channel.)

As an exemplary embodiment for the UHD service, the service type may be designated as a parameterized service (0x07), an extended parameterized service (0x09), or a new DTV service (0x10). The above-described service names and values are merely exemplary, and, therefore, other names and values may be configured (or set) herein.

The transmitting apparatus may signal information on the UHD service by using a service type field of the descriptor of the virtual channel included in the SVCT.

Fig. 8 illustrates a SVCT (Shortform Virtual Channel Table) according to another exemplary embodiment of the present invention. Signaling of information on a UHD service using a SVCT may also be performed by using another method. According to an exemplary embodiment, signaling of the information on a UHD service may use a channel type field within a virtual channel record of the SVCT. First of all, information included in the SVCT will be described as follows.

A table_id field identifies a table. For example, a table_id field value indicating a SVCT may be equal to 0xC4. (The table_ID of the Short-form Virtual Channel Table shall be 0xC4.)

A section_length field indicates in number of bytes a length of a table section that follows this field. (This is a twelve bit field that specifies the number of bytes of the section, starting immediately following the section_length field, and including the CRC. The value in this field shall not exceed 4093.)

A protocop_version field corresponds to a field having a function for allowing, in a later process, a current table type transmitting a parameter that is different from a parameter defined in the current protocol. (An 8-bit unsigned integer field whose function is to allow, in the future, this table type to carry parameters that may be structured differently than those defined in the current protocol. At present, the only valid value for protocol_version is zero. Non-zero values of protocol_version may only be processed by Hosts designed to accommodate the later versions as they become standardized.)

A transmission_medium field is set to 0. (This 4-bit field shall be set to zero (0x0).)

A table_subtype field indicates a map type being transmitted from the SVCT. For example, the map type may correspond to one of a Defined Channel Map (DCM), a Virtual Channel Map (VCM), and an Inversed Channel Map (ICM). (A 4-bit field that indicates the map type being delivered in this S-VCT section. Three map types are currently defined, the Virtual Channel Map (VCM), the Defined Channel Map (DCM), and the Inversed Channel Map (ICM). An S-VCT section received with table_subtype indicating an unknown or unsupported map type shall be discarded.)

A VCT_ID field indicates a VCT to which the definition of a channel within the corresponding table is being applied. (A 16-bit unsigned integer value, in the range 0x0000 to 0xFFFF, indicating the VCT to which the channel definitions in this table section apply. This 16-bit field may be used by the POD module for filtering purposes. Only one version of the S-VCT, corresponding to one value of VCT_ID, shall be delivered to the Host across the Extended Channel interface at a given time.)

A descriptor may include additional descriptors.

CRC_32 corresponds to a 32-bit field including a CRC values. (This is a 32-bit field that contains the CRC values that ensures a zero output from the registers in the decoder defined in an Annex A of ISO/IEC 13818-1 "MEPG-2 Systems" after processing the entire Long-form Virtual Channel Table section.)

If the table subtype corresponds to the DCM, information included in a DCM_structure descriptor is identified, and, if the table subtype corresponds to the ICM, information included in an ICM_structure descriptor is identified. If the table subtype corresponds to the VCM, information included in a VCM_structure descriptor is identified. According to an exemplary embodiment, the identification information respective to UHD may be included in the VCM_structure descriptor.

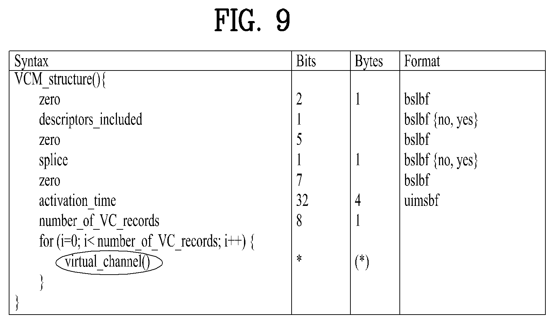

Fig. 9 illustrates a field that may be included in a VCM descriptor shown in Fig. 8. Information included in the VCM_structure descriptor will hereinafter be described as follows.

A descriptors_included field indicates whether or not a record level descriptor exists in the table. (A Boolean flag that indicates, when set, that one or more record-level descriptors are present in the table section. When the flag is clear, the record-level descriptor block is absent. The activation time indicates the time at which the data delivered in the table section will be valid.)

A splice field indicates whether or not to perform splicing at a predetermined time after undergoing a preparation process associated with a virtual channel change. (A Boolean flag that indicates, when set, that the Host should arm video processing hardware to execute the application of the data delivered in the VCM_structure() at the next MPEG-2 video splice point if the virtual channel changes described in the table section apply to a currently acquired channel, and the activation_time is reached. If the activation is immediate or specified as a time that has since passed, the data should be applied immediately. When the splice flag is clear, the virtual channel change is made directly, without arming video hardware for a splice.)

An activation_time field provides an absolute time. (A 32-bit unsigned integer field providing the absolute second the virtual channel data carried in the table section will be valid, defined as the number of seconds since 0000 Hours UTC, January 6th, 1980. If the GPS_UTC_offset delivered in the System Time Table is zero, activation_time includes the correction for leap seconds. Otherwise, activation_time can be converted to UTC by subtracting the GPS_UTC_offset. If the activation_time is in the past, the data in the table section shall be considered valid immediately. An activation_time value of zero shall be used to indicate immediate activation.)

A number_of_VC_records field identifies a number of virtual channel records that are located next within the table. A record is similar to a field. (An 8-bit unsigned integer number, in the range 1 to 255, that identifies the number of virtual_channels() records to follow in the table section. The number of records included is further limited by the allowed maximum table section length.)

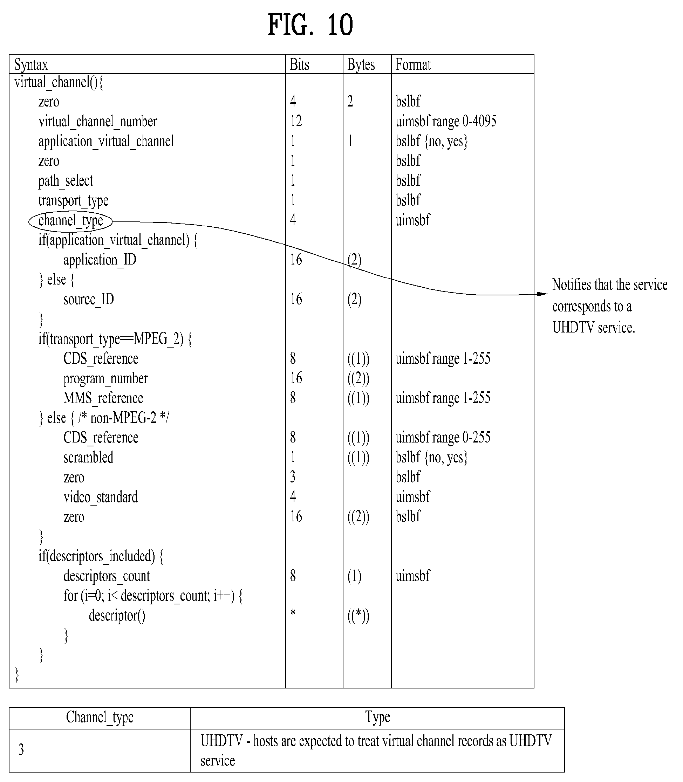

A virtual_channel descriptor will be described in detail in Fig. 10.

Fig. 10 illustrates exemplary signaling information indicating a UHD service that may be included in a virtual channel descriptor shown in Fig. 9. Information included in the virtual_channel descriptor will hereinafter be described as follows.

A virtual_channel_number field reflects a virtual channel that is provided and defined by the corresponding virtual channel record. (An unsigned 12-bit integer, in the range zero to 4095, reflecting the virtual channel whose definition is being provided by this virtual channel record, for the map identified by the VCT_ID field.)

An application_virtual_channel field indicates whether or not an access point is defined. (A binary flag that, when set, indicates this virtual channel defines an access point represented by the application_ID. When the flag is clear, the channel is not an application access point, and this virtual channel defines an access point represented by the source_ID. Support for application-type virtual channels is optional. Hosts not supporting application-type virtual channels may disregard all data associated with them. Support for application-type virtual channels is beyond the scope of this standard.)

A path_select field associates the virtual channel with a transmission path. (A 1-bit field that associates the virtual channel with a transmission path. For the cable transmission medium, path_select identifies which physical cable carries the Transport Stream associated with this virtual channel.)

A transport_type field identifies a transmission type (or transport type). (A 1-bit field identifying the type of transport carried on this carrier as either being an MPEG-2 transport (value zero), or not (value one).)

A channel_type field indicates the transmission type. (A 4-bit field defining the channel type.) According to an exemplary embodiment, by designating the channel_type field value to 3, the channel_type field may be used for notifying that the current channel correspond sot the virtual channel that transmits the UHD service data. More specifically, the transmitting apparatus may notify the receiving apparatus that the data being transmitted by using the virtual channel descriptor within the SVCT correspond to data associated with the UHD service.

An application_ID field identifies an application associated with the virtual channel. (A 16-bit unsigned integer number, in the range 0x0001 to 0xFFFF, that identifies the application associated with the virtual channel, on a system-wide basis. One particular program guide application, for example, may look for a program carrying data in its native transmission format by searching through the Short-form Virtual Channel Table for a match on its assigned application_ID. In some cases, one application may be able to process streams associated with more than one application ID. The application ID may be used to distinguish content as well as format, for the benefit of processing within the application. The value zero for application_ID shall not be assigned; if specified in a Virtual Channel record, the value zero indicates "unknown" or "inapplicable" for the application_ID/source_ID field.)

A source_ID field identifies a program source associated with the virtual channel. (A 16-bit unsigned integer number, in the range 0x0000 to 0xFFFF, that identifies the programming source associated with the virtual channel, on a system-wide basis. In this context, a source is one specific source of video, text, data, or audio programming. For the purpose of referencing virtual channels to the program guide database, each such program source is associated with a unique value of source_ID. The source_ID itself may appear in an EPG database, where it tags entries to specific services. The value zero for source_ID, if used, shall indicate the channel is not associated with a source ID.)

A CDS_reference field identifies a frequency associated with the virtual channel. (An unsigned 8-bit integer number, in the range 0 to 255, that identifies the frequency associated with this virtual channel. Values 1 to 255 of CDS_reference are used as indices into the Carrier Definition Subtable to find a frequency to tune to acquire the virtual channel. The value zero is reserved to indicate that the referenced service is carried on all digital multiplexes in this VCM. The CDS_reference field shall be disregarded for inactive channels.)

A program_number field associates the vitrual channel number that is defined with a service that is defined in a Program Association and TS Program Map Table. (A 16-bit unsigned integer number that associates the virtual channel number being defined with services defined in the Program Association and TS Program Map Table sections. Access to elementary streams defined in each virtual channel record involves first acquiring the Transport Stream on the carrier associated with the virtual channel, then referencing the Program Association section in PID 0 to find the PID associated with the TS Program Map Table section for this program_number. PIDs for each elementary stream are then found by acquisition of the TS Program Map Table section.)

A MMS_reference field indicates an entry within a MMS. (An 8-bit unsigned integer value, in the range 0 to 255, that references an entry in the Modulation Mode Subtable (MMS). The value zero is illegal and shall not be specified. For digital waveforms, the MMS_reference associates the carrier with a digital modulation mode. For Host implementations that support only one set of modulation parameters, in systems in which one modulation method is used for all carriers, storage and processing of the MMS_reference is unnecessary. The MMS_reference field shall be disregarded for inactive channels.)

A scrambled field indicates whether or not an associated non-standard signal has been encoded. (A 1-bit Boolean flag that indicates, when set, that the associated non-Standard waveform is scrambled. When the flag is clear, the non-standard waveform is in the clear.)

A video_standard field indicates a video standard that is associated with a non-standard virtual channel. (A 4-bit field that indicates the video standard associated with this non-Standard virtual channel.) For example, the video_standard field may be set to one of many values signifying a standard, such as NTSC, PAL 625, PAL 525, SECAM, MAC, and so on.

A descriptors_count field indicates a total length of the descriptors that follow, and a descriptor may further include additional information.

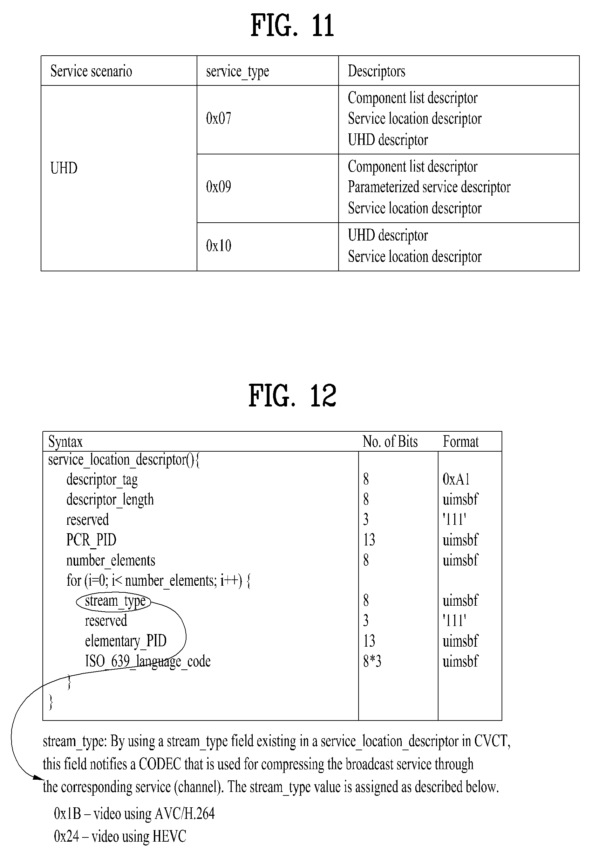

Fig. 11 illustrates an exemplary descriptor for a UHD service that may be included in a VCT according to an exemplary embodiment of the present invention. As described above, when the service type included in the LVCT is given the values of 0x07, 0x09, or 0x10, this may indicate that the data being transmitted to the corresponding channel are data associated with the UHD service, and, as shown in the example of Fig. 11, a detailed description including descriptors respective to the UHD service may be provided. Alternatively, when the service type included in a virtual channel descriptor of the SVCT is given the values of 0x07, 0x09, or 0x10, this may indicate that the data being transmitted to the corresponding channel are data associated with the UHD service.

In case the service_type is set to 0x07, the LVCT or SVCT may include a component list descriptor, a service location descriptor, and a UHD descriptor. In case the service_type is set to 0x09, the LVCT or SVCT may include a component list descriptor, a parameterized service descriptor, and a service location descriptor. In case the service_type is set to 0x10, the LVCT or SVCT may include a UHD descriptor and a service location descriptor.

Whether or not a UHD video is being serviced in the VCT may be signaled by using three different methods described below.

One of the methods corresponds to a method of signaling information respective to the UHD video service by setting the service_type to 0x07 and by using the component list descriptor.

In this case, this corresponds to a general method of signaling information respective to a video service by using HEVC rather than a method of signaling a service specified for UHD, and, information for determining whether or not the corresponding service can be decoded by the receiver may be signaled by using information included in a stream_info_details descriptor.

A second method corresponds to a method of signaling information respective to the UHD video service by setting the service_type to 0x09 and by using the component list descriptor. At this point, the service_type may be set to an extended parameterized service (service_type=0x09). In this case, description on information respective to the UHD service may be provided in more detail. More specifically, even if the same HEVC is used, the second method may show that the service corresponds to a service specified for UHD. In this case, detailed information shall be included by also using the parameterized service descriptor.

A third method corresponds to a method of signaling information respective to the UHD video service by setting the service_type to 0x10 and by using the UHD descriptor.

Each of the descriptors will be described in more detail later on.

Fig. 12 illustrates a service location descriptor according to an exemplary embodiment of the present invention. The service_location_descriptor may be positioned after the descriptors_length field or the descriptors_count. The service_location_descriptor may include the following information.

A descriptor_tag field may include an identifier identifying this descriptor, and a descriptor_length field may indicate a length of the descriptor.

A PCR_PID field indicates an identifier identifying a packet that can discover a PCR (Program Clock Reference) for a program service. (The PCR PID is the packet id where the program clock reference for a program service can be found.)

A number_elements field indicates a number of elements listed in the corresponding descriptor. (The number_elements field is that gives the number of elements listed in the descriptor.)

A stream_type field notifies a codec that is used for compressing the video that is being transmitted through the corresponding service (or channel). According to an exemplary embodiment, in case the stream type is 0x1B, this indicates that the transmitted video data have been compressed by using AVC/H.264. In case the stream type is 0x24, this indicates that the transmitted video data have been compressed by using HEVC.

An elementary_PID field indicates a packet ID that is designated in a PMT section for discovering (or finding) a specific elementary stream. (The elementary_PID is the packet id indicated in a PMT section to fine a particular elementary stream.)

An ISO_639_language_code field corresponds to a field included in the service_location_descriptor in order to identify a language being used in the elemnetary stream. (The ISO_639_language_code is a 24-bit three ASCII character field in an ATSC Service location descriptor that in conformance with ISO 639.2/B specifies the language used for the elementary stream.)

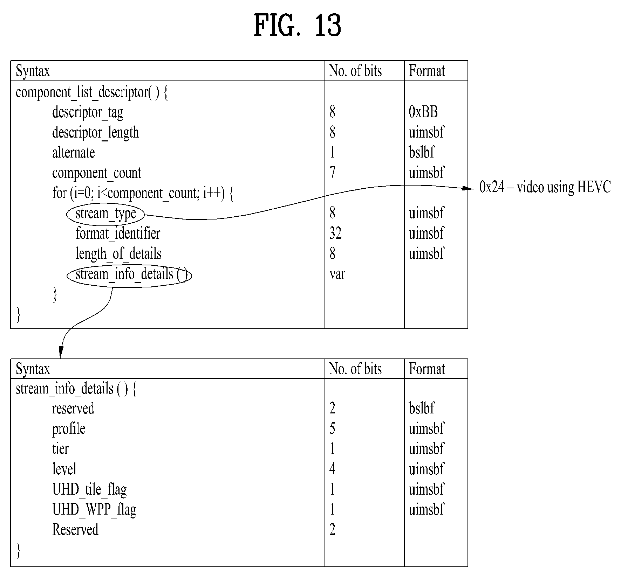

Fig. 13 illustrates a component list descriptor according to an exemplary embodiment of the present invention. The following information may be included in the component_list_descriptor.

A descriptor_tag field may include an identifier identifying this descriptor, and a descriptor_length field may indicate a length of the descriptor.

When an alternate field is set to 1, this indicates that the instance is a second instance of the component list descriptor, and, when this field is set to 0, this indicates that the instance is a first instance of this descriptor. (A flag that indicates, when set to '1', that this instance of the component_list_descriptor() is a second, "alternate" description of streams associated with the virtual channel. When the flag is set to '0', the set of stream types in the instance of the descriptor is the "primary" or "preferred" set. If only one component_list_descriptor() appears in the descriptor loop, the value of the alternate flag shall be set to '0'.)

A component_count field identifies a number of components being identified in the loop that follows. (This 7-bit unsigned integer shall specify the number of components specified in the "for" loop to follow. The value shall be in the range of 1 to 36.)

A stream_type field indicates a stream type associated with a component that is iterated within the loop. (This 8-bit unsigned integer field shall indicate the stream_type associated with the component described in this iteration of the "for" loop. Stream types in the range 0xC4 to 0xFF identify stream types defined privately.) According to an exemplary embodiment, in case of a video stream encoded by HEVC, the stream_type may be set to 0x24.

A format_identifier field identifies an entity providing the stream_type value. (This 32-bit unsigned integer shall identify the entity providing the stream_type value.)

A length_of_details field identifies a defined length of a stream_info_details field. (This 8-bit unsigned integer shall specify the length, in bytes, of the defined length of the stream_info_details() field to follow.)

A stream_info_details provides additional information existing in the component that is identified by the stream_type field value. (This field shall provide further information pertaining to the component identified by the value in the preceding stream_type field.) For example, the stream_info_details may provide information indicating whether or not the video stream that is currently being transmitted can be decoded and played-back by the receiving apparatus. In case of a video stream that is HEVC-encoded, by notifying information associated with parallel processing along with profile, level, tier information to the receiving apparatus through stream_info_details, information allowing the receiving apparatus to determine a stream that cannot be played may be included. The stream_info_details field may include the following information.

A profile signifies a profile value of a HEVC codec, and the profile may be given values of a Main Profile or a Main 10 Profile, and so on.

A tier may be used along with a level for the purpose of restricting the maximum bit rate. Generally, in case of broadcasting, the tier may be designated as a Main tier.

A level may be designated as Level 5.0 in case of 3840x2160, 30Hz, and may be designated as Level 5.1 in case of 3840x2160, 60Hz.

A UHD_tile_flag includes information on whether or not HEVC compression uses a parallel processing structure through a tile format, in case a video stream is compressed by using a HEVC codec.

A UHD_WPP_flag includes information on whether or not HEVC compression uses a parallel processing structure through a WPP (Waveform Parallel Processing) method, in case a video stream is compressed by using a HEVC codec.

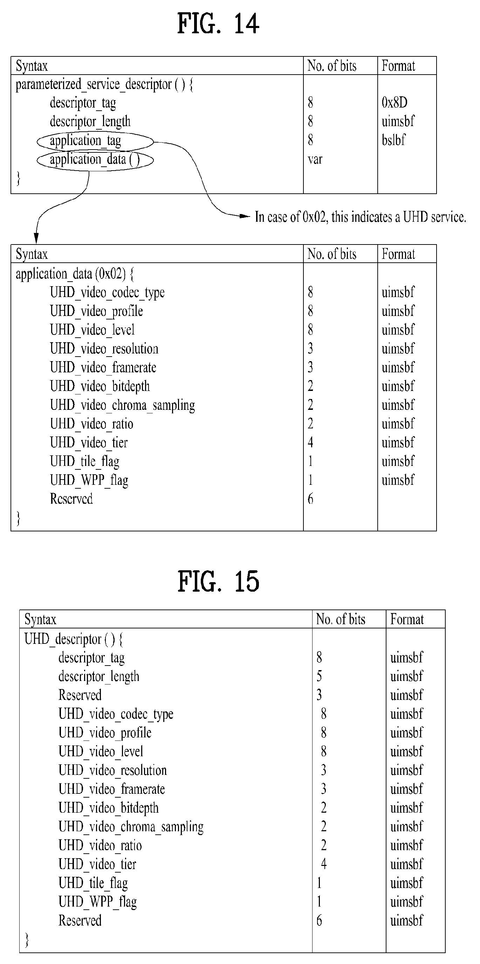

Fig. 14 illustrates a parameterized service descriptor according to an exemplary embodiment of the present invention. As described above, the service_type may be set to an extended parameterized service (service_type=0x09). In this case, detailed information shall be included by also using the parameterized service descriptor.

A descriptor_tag field may include an identifier identifying this descriptor, and a descriptor_length field may indicate a length of the descriptor.

An application_tag identifies an application that is associated with a syntax or semantics of application_data that follows. (This 8-bit unsigned integer shall uniquely identify the application associated with the syntax and semantics of the application_data to follow.) According to an exemplary embodiment, in case the application_data value is equal to 0x02, this may indicate a UHD service.

An application_data is set in accordance with the value of the associated application_tag. (The syntax and semantics of this field shall be as specified in the standard that establishes the associated application_tag value.) According to an exemplary embodiment, in case the application_tag value is equal to 0x02, the application_data may include a field associated with the UHD service.

The application_data may include detailed information respective to the service, and the application_data may include the following information is association with the UHD service.

A UHD_video_codec type field indicates a codec of a video element configuring the UHD service. This field has the same value as the stream_type of the PMT. The stream_type of the PMT indicates information on MPEG-2, H.264/AVC or HEVC, and so on.

A UHD_video_profile field indicates a profile respective to the corresponding video stream, i.e., basic specification required for decoding the corresponding stream. The UHD_video_profile field includes requirement information respective to chroma sampling (e.g., 4:2:0, 4:2:2, and so on), bit depth (e.g., 8 bits, 10 bits), coding tool, and so on, of the corresponding video stream.

A UHD_video_level field defines a level respective to the corresponding video stream, i.e., up to which range the technical element defined in the profile is to be supported. Herein, information on resolution, frame rate, bit rate, and so on, are included.

As a field signaling information respective to the UHD video format, a UHD_video_resolution field indicates a resolution of the video. (For example, 3840x2160, 4096x2160, 7680x4320, and so on.)

A UHD_video_framerate field indicates frame rate information of the UHD video. (For example, 30fps, 60fps, 120fps, and so on.)

A UHD_video_bitdepth field indicates bit depth information of the UHD video. (For example, 8 bits, 10 bits, 12 bits, and so on.)

A UHD_video_chroma_sampling field indicates chroma sampling information of the UHD video. (For example, 4:2:0,4:2:2, 4:4:4, and so on.)

A UHD_video_ratio field indicates UHD video ration information. (For example, 16:9, 21:9, and so on.)

A UHD_video_tier field indicates maximum bit rate information of a video stream by being linked to the level. The tier is used for providing a higher maximum bit rate as compared to the conventional maximum bit rate. The tier may be divided into a main tier and a high tier. More specifically, for a case when an image of a higher picture quality is being required, the tier may be divide the max bit rate respective to the level in accordance with its purpose.

A specified category of level contstraints imposed on values of the syntax elements in the bitstream, where the level constraints are nested within a tier and a decoder conforming to a certain tier and level would be capable of decoding all bitstreams that conform to the same tier or the lower tier of that level or any level.

A UHD_tile_flag includes information on whether or not HEVC compression uses a parallel processing structure through a tile format, in case a video stream is compressed by using a HEVC codec.

A UHD_WPP_flag includes information on whether or not HEVC compression uses a parallel processing structure through a WPP (Waveform Parallel Processing) method, in case a video stream is compressed by using a HEVC codec.

By using the above-described method, the receiving apparatus may receive UHD channel information by using the information included in the descriptor, thereby being capable of performing the UHD service.

Fig. 15 illustrates a method of signaling information for a UHD service according to an exemplary embodiment of the present invention. In case the service_type is set to 0x10, the detailed information associated with the UHD service may be signaled by using the UHD descriptor. The UHD descriptor may include the following information.

A descriptor_tag field may include an identifier identifying this descriptor, and a descriptor_length field may indicate a length of the descriptor.

A UHD_video_codec_type field indicates a codec of a video element configuring the UHD service. This field has the same value as the stream_type of the PMT. The stream_type of the PMT indicates information on MPEG-2, H.264/AVC or HEVC, and so on.

A UHD_video_profile field indicates a profile respective to the corresponding video stream, i.e., basic specification required for decoding the corresponding stream. The UHD_video_profile field includes requirement information respective to chroma sampling (e.g., 4:2:0, 4:2:2, and so on), bit depth (e.g., 8 bits, 10 bits), coding tool, and so on, of the corresponding video stream.

A UHD_video_level field defines a level respective to the corresponding video stream, i.e., up to which range the technical element defined in the profile is to be supported. Herein, information on resolution, frame rate, bit rate, and so on, are included.

As a field signaling information respective to the UHD video format, a UHD_video_resolution field indicates a resolution of the video. (For example, 3840x2160, 4096x2160, 7680x4320, and so on.)

A UHD_video_framerate field indicates frame rate information of the UHD video. (For example, 30fps, 60fps, 120fps, and so on.)

A UHD_video_bitdepth field indicates bit depth information of the UHD video. (For example, 8 bits, 10 bits, 12 bits, and so on.)

A UHD_video_chroma_sampling field indicates chroma sampling information of the UHD video. (For example, 4:2:0,4:2:2, 4:4:4, and so on.)

A UHD_video_ratio field indicates UHD video ration information. (For example, 16:9, 21:9, and so on.)

A UHD_video_tier field indicates maximum bit rate information of a video stream by being linked to the level. The tier is used for providing a higher maximum bit rate as compared to the conventional maximum bit rate. The tier may be divided into a main tier and a high tier. More specifically, for a case when an image of a higher picture quality is being required, the tier may be divide the max bit rate respective to the level in accordance with its purpose.

A specified category of level contstraints imposed on values of the syntax elements in the bitstream, where the level constraints are nested within a tier and a decoder conforming to a certain tier and level would be capable of decoding all bitstreams that conform to the same tier or the lower tier of that level or any level.

A UHD_tile_flag includes information on whether or not HEVC compression uses a parallel processing structure through a tile format, in case a video stream is compressed by using a HEVC codec.

A UHD_WPP_flag includes information on whether or not HEVC compression uses a parallel processing structure through a WPP (Waveform Parallel Processing) method, in case a video stream is compressed by using a HEVC codec.

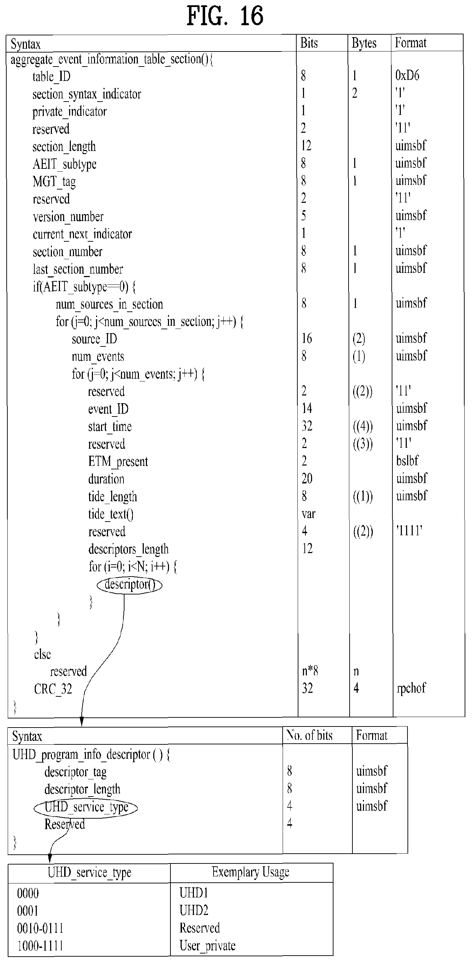

Fig. 16 illustrates an exemplary AEIT (Aggregate Event Information Table) according to an exemplary embodiment of the present invention. An AEIT (Aggregate Event Information Table) may include additional information respective to an event of each channel. Additionally, the AEIT may signal information respective to diverse UHD services by including information respective to the types of UHD services (e.g., UHD1(1K), UHD2(4K), or types of UHD services defined by the user in accordance with a division respective to picture quality.)

The AEIT may include the following information.

A table_ID field identifies a table. For example, in case of the AEIT, the table_ID field is 0xD6. (Tha table_ID of the Aggregate Event Information Table shall be 0xD6.)

A section_syntax_indicator field indicates that the section follows a generic section syntax following the section length field, and this field is set to 1. (This 1-bit field shall be set to '1'. It denotes that the section follows the generic section syntax beyond the section length field.)

A private_indicator field corresponds to a 1-bt field being set to '1'. (This 1-bit field shall be set to '1'.)

A section_length field indicates a length of a table section that follows this field in bytes. (12-bit field specifying the number of remaining bytes in this section immediately following the section_length field up to the end of the section, including the CRC_32 field. The value of this field shall not exceed 4,093.)

An AEIT_subtype field identifies a subtype of the AEIT. (This 8-bit field identifies the subtype of the AEIT. In the current protocol, only table subtype value 0x0 is defined. Host devices shall discard instances of the aggregate_event_information_table_section() in which an unknown AEIT_subtype is specified (currently, any value other than zero).)

A MGT_tag field associates an AEIT instance with a corresponding table type of a MGT and with an AEIT instnace having the same value. (An 8-bit field that ties this AEIT instance to the corresponding table_type in the MGT and to an AEIT instance with the same value. The MGT_tag value for an AEIT instance for a given timeslot with the higher (modulo 256) than the instance for the preceding time period.)

A version_number field corresponds to a 5-bit field indicating a version number of the table. (This 5-bit field is the version number of the AEIT instance. And instance is identified by the MGT_tag. The version number shall be incremented by 1 modulo 32 when any field in the AEIT instance changes. The value of this field shall be identical to that of the corresponding entry in the MGT.)

A current_next_indicator field is always set to 1 in an AEIT section. (This 1-bit indicator is always set to '1' for AEIT sections; the AEIT sent is always currently applicable.)

A section_number field always assigns a number of the corresponding section. (This 8-bit field gives the number of this section.)

A last_section_number field identifies a number of a last section. (This 8-bit field specifies the number of the last section.)

A num_sources_in_section field assigns a number of loops being iterated. (This 8-bit field gives the number of iterations of the "for" loop describing program schedule data.)

A source_ID field identifies a source ID of the virtual channel transmitting an event described in the corresponding section. (This 16-bit field specifies the source_ID of the virtual channel carrying the events described in this section.)

A num_events field indicates a number of events following an associated program source that is identified by the source ID. (Indicates the number of events to follow associated with the program source identified by source_ID. Value 0 indicates no events are defined for this source for the time period covered by the AEIT instance.)

An event_ID field indicates an identification number of an event. (This 14-bit field specifies the identification number of the event described. This number serves as a part of the event ETM_ID (identifier for event Extended Text Message). An assigned event_ID shall be unique at least within the scope of the instance of the AEIT in which it appears. Accordingly, as an example, the event associated with the event_ID 0x0123 in AEIT-m shall be considered to be an event distinct from event_ID 0x0123 in AEIT-n, when m is not equal to n.)

A start_time field indicates a start time of the corresponding event. (A 32-bit unsigned integer quantity representing the start time of this event as the number of seconds since 0000 Hours UTC, January 6th, 1980. If the GPS_UTC_offset delivered in the System Time Table is zero, start_time includes the correction for leap seconds. Otherwise, start_time can be converted to UTC by subtracting the GPS_UTC_offset.)

An ETM_present field indicates a presence or absence of an ETM. (This 2-bit field indicates the existence of an Extended Text Message (ETM).)

A duration field indicates a duration of the corresponding event. (Duration of this event in seconds.)

A title_length field indicates a length of a title_text(). (This field specifies the length (in bytes) of the title_text(). Value 0 means that no title exists for this event.)

A title_text field indicates an event title in a format of a Multiple String Structure. (The event title in the format of a Multiple String Structure. title_text() shall be formatted according to the Multiple String Structure.)

A descriptos_length field indicates a length of a next event descriptor. (Total length (in bytes) of the event descriptor list that follows.)

A descriptor may include information on a UHD service. According to an exemplary embodiment, a descriptor may also be referred to as a UHD program info descriptor. The descriptor will be described in more detail later on.

CRC_32 corresponds to a 32-bit field including a CRC values. (This is a 32-bit field that contains the CRC values that ensures a zero output from the registers in the decoder defined in an Annex A of ISO/IEC 13818-1 "MEPG-2 Systems" after processing the entire Long-form Virtual Channel Table section.)

AUHD_program_info_descriptor may include the following information.

A descriptor_tag field may include an identifier identifying this descriptor, and a descriptor_length field indicates a length of the describer.

A UHD_service_type field may include information respective to the types of UHD services (e.g., UHD1(4K), UHD2(8K), or types of UHD services defined by the user in accordance with a division respective to quality.) For example, when the UHD service type value is equal to 0000, a UHD1(4K) service may be provided. When the UHD service type value is equal to 0001, a UHD2(8K) service may be provided. When the UHD service type value is equal to 1000-1111, a UHD service that is set up by the user may be provided. As described above, diverse types of UHD services may be provided by using the UHD service type field.

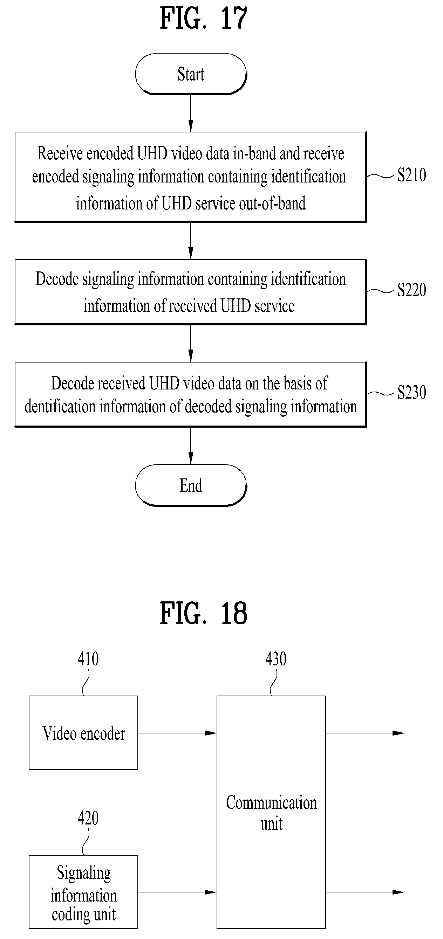

Fig. 17 illustrates a method of receiving a signal according to an exemplary embodiment of the present invention.

A receiving apparatus may receive encoded UHD video data via In Band and may receive signaling information including identification of an encoded UHD service via Out Of Band (S210). The signaling information may correspond to information that can identify the UHD video data that are being received and may also correspond to detailed information of the UHD video data.

As shown in Fig. 2, the receiving apparatus may include a POD (Point Of Deployment). The POD may process the signaling information that is being received and may verify whether or not a subscription has been made with respect to the broadcast service, thereby being capable of providing a final service. The POD may include a Conditional Access (CA) system, and the POD may be separated from the receiving apparatus main body.

The POD may verify its authority on the UHD broadcast service and may then provide the UHD broadcast service to the user. When the authority is verified, the receiving apparatus may receive the encoded UHD video data through the IB channel and may receive the signaling information including the encoded UHD identification information through the OOB channel.

The receiving apparatus may decode signaling information including the received UHD identification information (S220). The signaling information may include LVCT (Longform Virtual Channel Table), SVCT (Shortform Virtual Channel Table) or AEIT (Aggregate Event Information Table).

According to an exemplary embodiment, the transmitting apparatus may signal UHD service information by using a service type field of the LVCT. Alternatively, the transmitting apparatus may also signal UHD service information by using a service_type field of a channel_properties_descriptor in a virtual_channel_record, which is included in the SVCT. In another method, the transmitting apparatus may signal the UHD service information by using a channel_type field in a virtual_channel_record, which is included in the SVCT.

In case of signaling the UHD service information by using a UHD_program_info_descriptor included in the AEIT, the transmitting apparatus may provide diverse UHD services in accordance with predetermined UHD service types.

Based upon the decoded UHD identification information, the receiving apparatus may decode the received UHD video data so as to provide the UHD service (S230).

Fig. 18 illustrates a method of transmitting a signal according to an exemplary embodiment of the present invention.

An exemplary embodiment of the signal transmitting apparatus may include a video encoder (410), a signaling information coding unit (420), and a communication unit (430).

The video encoder (410) encodes UHD (Ultra High Definition) video data. For example, the encoded UHD video data may have a resolution of 4K, 8K, 16K, and so on.

The signaling information coding unit (420) encodes signaling information, which includes identification information of a UHD service based upon the encoded UHD video data. UHD service identification information may be signaled by using the LVCT. Examples of signaling the UHD service by using the LVCT have been described above with reference to Figs. 3, 11, 12, 13, 14, and 15. Examples of signaling the UHD service by using the service_type field have been described above with reference to Figs. 4, 5, 6, 7, 11, 12, 13, 14, and 15. Examples of signaling the UHD service by using the channel_type field have been described above with reference to Figs. 8, 9, 10, 11, 12, 13, 14, and 15. Meanwhile, a method of signaling a UHD service by using the AEIT may provide diverse UHD services. An example of signaling a UHD service by using the AEIT has been described above with reference to Fig. 16.

The communication unit (430) transmits the encoded UHD video data via IB (in-band) and transmits the signaling information including identification information of the encoded UHD service via OOB (out-of-band). An example of the UHD video data being transmitted via IB and the signaling information being transmitted via OOB has been described above with reference to Fig. 2.

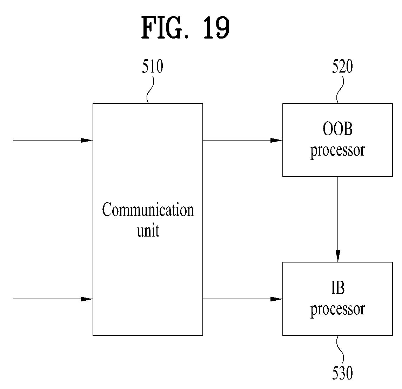

Fig. 19 illustrates an apparatus of receiving a signal according to an exemplary embodiment of the present invention.

A communication unit (510) receives the encoded UHD video data via IB (in-band) and receives the signaling information including identification information of the encoded UHD service via OOB (out-of-band). An example wherein the UHD video data are transmitted via IB, and wherein the signaling information is transmitted via OOB, has been described above with reference to Fig. 2.

An OOB processor (520) decodes the signaling information, which includes the identification information of the received UHD service. The signaling information may be decoded after undergoing demultiplexing process. The signaling information may include information on the UHD service.

The information on the UHD service may be included in the LVCT, SVCT, or AEIT. The identification information respective to a UHD service included in the LVCT has been described above with reference to Figs. 3, 11, 12, 13, 14, and 15. The identification information respective to a UHD service included in a service_type field of the SVCT has been described above with reference to Figs. 4, 5, 6, 7, 11, 12, 13, 14, and 15. And, the identification information respective to a UHD service included in a channel_type field of the SVCT has been described above with reference to Figs. 8, 9, 10, 11, 12, 13, 14, and 15. The identification information respective to a UHD service included in the AEIT has been described above with reference to Fig. 16.

An IB processor (530) decodes the received UHD video data based upon the identification information of the decoded UHD service.

### Mode for Carrying Out the Present Invention

The mode for carrying out the present invention has been described in the best mode for carrying out the present invention.

### Industrial Applicability

The present invention may be used in the fields of broadcasting and video signal processing and may be industrially applicable to an industry that has the possibility of iteration.

## Claims

1. A method of transmitting a signal comprising, the steps of:
encoding ultra high definition (UHD) video data;
encoding signaling information containing identification information of UHD service on the basis of the encoded UHD video data; and
transmitting the encoded UHD video data in-band (IB) and transmitting the encoded signaling information containing identification information of UHD service out-of-band (OOB).

2. The method of claim 1, wherein the identification information is included in a LVCT (Longform Virtual Channel Table).

3. The method of claim 1, wherein the identification information is included in a channel properties descriptor in a SVCT (Shortform Virtual Channel Table).

4. The method of claim 1, wherein the identification information is included in a virtual channel descriptor in a SVCT (Shortform Virtual Channel Table).

5. A method of receiving a signal comprising, the steps of:
receiving encoded UHD video data in-band (IB) and receiving encoded signaling information containing identification information of UHD service out-of-band (OOB);
decoding signaling information containing identification information of the received UHD service; and
decoding the received UHD video data on the basis of the identification information of the decoded signaling information.

6. The method of claim 5, wherein the identification information is included in a LVCT (Longform Virtual Channel Table).

7. The method of claim 5, wherein the identification information is included in a channel properties descriptor in a SVCT (Shortform Virtual Channel Table).

8. The method of claim 5, wherein the identification information is included in a virtual channel descriptor in a SVCT (Shortform Virtual Channel Table).

9. An apparatus of transmitting a signal, comprising:
a video encoder encoding ultra high definition (UHD) video data;
a signaling information coding unit encoding signaling information containing identification information of UHD service on the basis of the encoded UHD video data; and
a communication unit transmitting the encoded UHD video data in-band (IB) and transmitting the encoded signaling information containing identification information of UHD service out-of-band (OOB).

10. The apparatus of claim 9, wherein the identification information is included in a LVCT (Longform Virtual Channel Table).

11. The apparatus of claim 9, wherein the identification information is included in a channel properties descriptor in a SVCT (Shortform Virtual Channel Table).

12. The apparatus of claim 9, wherein the identification information is included in a virtual channel descriptor in a SVCT (Shortform Virtual Channel Table).

13. An apparatus of receiving a broadcast signal, comprising:
a communication unit receiving encoded UHD video data in-band (IB) and receiving encoded signaling information containing identification information of UHD service out-of-band (OOB);
an OOB processor decoding signaling information containing identification information of the received UHD service; and
an IB processor decoding the received UHD video data on the basis of the identification information of the decoded signaling information.

14. The apparatus of claim 13, wherein the identification information is included in a LVCT (Longform Virtual Channel Table).

15. The apparatus of claim 13, wherein the identification information is included in a channel properties descriptor in a SVCT (Shortform Virtual Channel Table), and wherein the identification information is included in a virtual channel descriptor in a SVCT.
